# FASCICULE DE BREVET EUROPEEN

(11) **EP 3 762 625 B1**
(45) Date de publication et mention de la délivrance du brevet: **07.12.2022**
(21) Numéro de dépôt: 19715166.5
(22) Date de dépôt: 07.03.2019
(51) Int. Cl.: F16D 3/18, F16D 3/50, F16D 3/78

(54) **ACCOUPLEMENT FLEXIBLE COMPRENANT DES SOUFFLETS ET DES DENTS DE REPRISE DE COUPLE**
FLEXIBLE KUPPLUNG MIT BALG UND DREHMOMENT-RÜCKSTELLZÄHNEN
FLEXIBLE COUPLING COMPRISING BELLOWS AND TORQUE RECOVERY TEETH

(30) Priorité: 09.03.2018 FR 1852049
(43) Date de publication de la demande: 13.01.2021
(73) Titulaire: SAFRAN AIRCRAFT ENGINES, 75015 Paris (FR)
(72) Inventeur: ROUSSELIN, Stéphane, 77550 MOISSY-CRAMAYEL (FR); SEZEUR, Mathieu, Raymond, Paul, 77550 MOISSY-CRAMAYEL (FR); RENAULT, Frédéric, Raymond, 77550 MOISSY-CRAMAYEL (FR)
(74) Mandataire: Regimbeau
(86) Numéro de dépôt international: PCT/FR2019/050512
(87) Numéro de publication internationale: WO 2019/171008

(56) Documents cités:
- EP-A1- 3 130 815
- EP-A1- 3 130 815
- CH-A- 292 174
- FR-A1- 2 990 011
- JP-A- 2002 054 651
- JP-A- 2002 054 651
- US-A1- 2009 107 237

## Description

### DOMAINE DE L'INVENTION

L'invention concerne un dispositif d'accouplement flexible pour deux arbres tournants, notamment dans le domaine de l'aéronautique.

### ARRIERE-PLAN TECHNOLOGIQUE

Dans le cadre du développement des turboréacteurs, des modules complets (section de soufflante, turbine basse pression, etc.) sont montés sur banc d'essai pour être testés. Au montage, comme la machine à tester et le banc constituent deux modules indépendants, il y a un désalignement systématique entre les axes de rotation de la machine et du banc et donc un risque de ne pas pouvoir accoupler l'arbre de rotation de la machine avec celui du banc.

Ce risque est également présent dans les turboréacteurs comportant un mécanisme de réduction (notamment entre la section de soufflante et l'arbre basse pression) : on cherche à isoler le mécanisme de réduction pour limiter la transmission des déformations et des efforts moteur aux composants du mécanisme de réduction.

Pour cela, des accouplements dits flexibles sont installés à la jonction entre l'arbre menant et l'arbre mené. Les accouplements flexibles sont des moyens bien connus pour lier en rotation deux arbres susceptibles de présenter un désalignement de leurs axes respectifs ou un écart dans le positionnement de ces arbres le long de leurs axes. Les accouplements flexibles utilisés en aéronautique doivent présenter des performances élevées pour un encombrement réduit, avec cependant un désalignement et un décalage axial faibles des arbres. De tels accouplements flexibles, dont le diamètre peut être inférieur à 100 mm, transmettent couramment un couple de 1000 Nm à des vitesses de 20 00020 tours/mm, à des températures atteignant 1000 °C, et doivent présenter une fiabilité totale pendant une durée d'utilisation prédéterminée.

Ces accouplements flexibles permettent de gérer à la fois des désalignements entre deux lignes d'arbre, mais également de dissocier la réponse dynamique de la machine de celle du banc. Les accouplements flexibles sont systématiquement montés par paire avec un arbre de liaison entre eux, de façon à gérer le désalignement entre l'arbre mené (arbre machine) et l'arbre menant (arbre d'entrainement).

Toutefois, les accouplements flexibles utilisés sont souvent approvisionnés auprès de fabricants spécialisés, ce qui rend difficile la maîtrise de leurs caractéristiques de souplesse. En particulier, la rigidité conique (correspondant au rapport entre le couple de désalignement et le désalignement angulaire, exprimé en m.KN/radian) n'est jamais caractérisée par les fabricants.

La valeur de cette rigidité a pourtant un impact direct sur la situation dynamique de la machine (fréquence des modes critiques, charges sous balourd harmonique). La connaissance de cette grandeur est par conséquent essentielle lors de la conception d'une turbomachine.

D'autre part, pour une faible rigidité conique, les accouplements flexibles doivent être souples ce qui va de paire avec une plus faible tenue mécanique au couple : plus un accouplement flexible est souple, moins il peut transmettre de couple.

De plus, les accouplements flexibles sont souvent constitués d'un empilement de lamelles fines fixées sur deux brides (voir notamment les documents FR 2 728 636 et FR 2 756 889 au nom de HISPANO SUIZA) ce qui les rend peu axisymétriques (répartition de masse hétérogène autour de l'axe). En conséquence, l'équilibrage de ces accouplements flexibles ne peut être fait finement, ce qui conduit à une limitation sur la vitesse maximale atteignable par les arbres.

Enfin, comme montré avec l'exemple précédent des accouplements flexibles à lamelles, du fait de nombreux éléments d'assemblage (vis pour fixer les lamelles, vis pour l'accouplement avec les arbres) la masse de l'ensemble est élevée ce qui peut être préjudiciable au comportement dynamique global de la machine et du banc d'essai, ou du turboréacteur si celui-ci comprend un mécanisme de réduction. En effet, en particulier dans le domaine de l'aéronautique, on cherche à minimiser la masse en porte-à-faux sur les arbres pour maintenir le premier mode de flexion au-dessus de la vitesse maximale de la machine d'essai. Un autre exemple d'accouplement flexible est divulgué dans le document EP3130815 A1.

### RESUME DE L'INVENTION

Un objectif de l'invention est donc de proposer un nouveau système permettant d'accoupler un arbre menant et un arbre mené, qui puisse présenter à la fois une faible rigidité conique et une bonne tenue au couple en s'affranchissant des limitations sur la vitesse de rotation pouvant être atteinte par l'arbre menant.

De manière secondaire, l'objectif de l'invention est également de proposer un système ne nécessitant pas d'élément d'assemblage, qui soit simple, facile à mettre en place et ne requiert pas d'adaptation importantes sur l'arbre menant et l'arbre mené.

Pour cela, l'invention propose un accouplement flexible selon la revendication 1, configuré pour accoupler un premier arbre et un deuxième arbre, ledit accouplement flexible étant caractérisé en ce qu'il comprend :
- un premier corps d'accouplement externe sensiblement cylindrique de révolution autour d'un axe, ledit premier corps comportant une première extrémité configurée pour être fixée au premier arbre, une deuxième extrémité configurée pour être fixée au deuxième arbre et un tronçon de liaison qui relie la première et la deuxième extrémité, le premier corps présentant une face radialement interne et comprenant au moins une première dent, fixée sur la face radialement interne,
- un deuxième corps d'accouplement interne sensiblement cylindrique de révolution qui est disposé à l'intérieur du premier corps en étant fixé au tronçon de liaison, le deuxième corps présentant une face radialement externe et comprend au moins une deuxième dent fixée sur ladite face radialement externe.

La première dent et la deuxième dent sont configurées pour venir en contact lorsqu'un couple est appliqué à la première extrémité du premier corps afin de transmettre ledit couple à la deuxième extrémité du premier corps par l'intermédiaire du deuxième corps.

Certains aspects préférés mais non limitatifs de l'accouplement flexible décrit ci-dessus sont les suivants, pris individuellement ou en combinaison :
- l'accouplement flexible comprend plusieurs premières dents et autant de deuxièmes dents, chaque première dent étant configurée pour venir en contact avec la deuxième dent correspondante lorsqu'un couple est appliqué à la première extrémité du premier corps afin de transmettre ledit couple à la deuxième extrémité du premier corps par l'intermédiaire du deuxième corps.
- la première extrémité et la deuxième extrémité comportent au moins trois portées, séparées deux à deux par une gorge.
- la première extrémité et la deuxième extrémité du premier corps sont configurées pour être insérées dans des logements correspondants formés dans le premier arbre et le deuxième arbre, respectivement, et dans lequel la première extrémité et la deuxième extrémité comportent chacune au moins un ergot configuré pour pénétrer dans une rainure associée formée dans une paroi du logement correspondant. et/ou
- le premier corps et le deuxième corps sont monolithiques.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

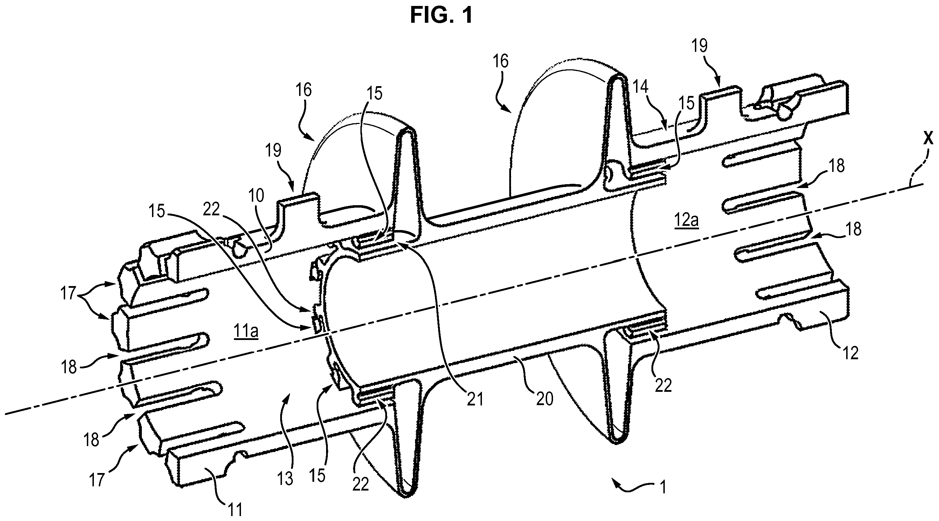

La figure 1 est une vue en perspective illustrant un exemple de réalisation d'un accouplement flexible conforme à l'invention.
La figure 2a illustre la répartition des contraintes dans un accouplement flexible dépourvu de premières et deuxièmes dents 22 lorsqu'un couple est appliqué à ses première et deuxième extrémités.
La figure 2b la répartition des contraintes dans l'accouplement flexible de la figure 1 lorsqu'un couple est appliqué à ses première et deuxième extrémités.

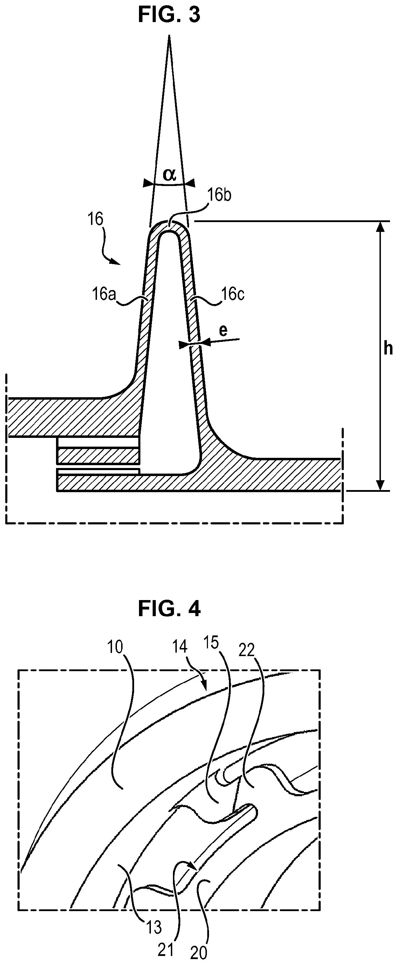

La figure 3 est une vue en coupe d'une portion de soufflet de l'accouplement flexible de la figure 1.
La figure 4 est une vue en perspective d'une première et d'une deuxième dent 22 d'un accouplement flexible après fabrication dudit accouplement flexible par fabrication additive et avant séparation desdites dents.

### DESCRIPTION DETAILLEE D'UN MODE DE REALISATION

Un accouplement flexible 1 conforme à l'invention est configuré pour accoupler un premier arbre, ou arbre menant, à un deuxième arbre, ou arbre mené.

Pour cela, l'accouplement flexible 1 comprend un premier corps 10 et un deuxième corps 20, le premier corps 10 étant fixé solidairement au deuxième corps.

Le premier corps 10 est sensiblement cylindrique de révolution autour d'un axe X. Il comporte une première extrémité 11 configurée pour être fixée sur l'arbre menant et une deuxième extrémité 12 configurée pour être fixée sur l'arbre mené. Le premier corps 10 présente en outre une face radialement interne 13, orientée vers l'axe X, et une face radialement externe 14.

Le deuxième corps 20 est également sensiblement cylindrique de révolution. Il s'étend dans le premier corps 10 et est de préférence monolithique avec celui-ci. Le deuxième corps 20 présente une face radialement externe 21, qui s'étend en regard de la face radialement interne 13 du premier corps 10. Le diamètre du corps interne 20 est donc inférieur au diamètre du corps externe 10.

Par ailleurs, dans le mode de réalisation illustré sur les figures, le premier corps 10 comprend une partie menante 11a, comportant la première extrémité 11, et une partie menée 12a, comportant la deuxième extrémité 12. La partie menante 11a et la partie menée 12a du premier corps 10 sont séparées l'une de l'autre et sont reliées entre elles par l'intermédiaire du deuxième corps 20.

Par sensiblement cylindrique de révolution, on comprendra ici que le premier corps 10 et le deuxième corps 20 présentent la forme générale d'un cylindre de révolution, excepté dans des zones localisées dans lesquelles ils peuvent comporter des protubérances locales et/ou des saillies locales.

Dans ce qui suit, pour simplifier la lecture de la description, nous désignerons le premier corps 10 par corps externe 10 et le deuxième corps 20 par corps interne 20.

Le corps externe 10 comprend au moins une première dent 15, fixée sur sa face radialement interne 13, tandis que le corps interne 20 comprend au moins une deuxième dent 22, fixée sur sa face radialement externe 21. La première et la deuxième dent 22 sont configurées pour venir en contact lorsqu'un couple est appliqué à la première extrémité 11 du corps externe 10 afin de transmettre ledit couple à la deuxième extrémité 12 du corps externe 10 en faisant transiter les efforts par le corps interne 20.

Le corps externe 10 peut comporter plusieurs premières dents 15 tandis que le corps interne 20 comporte autant de deuxièmes dents 22, par exemple une dizaine, chaque première dent 15 étant configurée pour venir en contact avec une deuxième dent 22 associée afin de transmettre un couple d'une extrémité à l'autre du corps externe 10 par l'intermédiaire du corps interne 20. Les premières et deuxièmes dents 15, 22 sont de préférence équiréparties sur la face radialement interne 13 du corps externe 10 et la face radialement externe 21 du corps interne 20, respectivement.

Les première(s) et deuxième(s) dents 15, 22 sont formées intégralement et en une seule pièce (c'est-à-dire venues de matière) avec le corps externe 10 et le corps interne 20, respectivement.

Afin de conférer une flexibilité à l'accouplement flexible 1 et permettre ainsi de compenser les décalages axiaux et les désalignements radiaux et en flexion entre l'arbre menant et l'arbre mené, l'accouplement flexible 1 comprend en outre un soufflet 16 s'étendant entre le corps externe 10 et le corps interne 20 afin d'autoriser des débattements radiaux, axiaux et en flexion par rapport à l'axe X.

Plus précisément, dans le mode de réalisation illustré sur les figures, la partie menante 11a et la partie menée 12a du corps externe 10 sont séparées l'une de l'autre et sont reliées entre elles par l'intermédiaire du soufflet 16 et du corps interne 20.

De préférence, l'accouplement flexible 1 est symétrique et comprend deux soufflets 16, un premier des soufflets 16 connectant la partie menante 11a du corps externe 10 au corps interne 20 tandis que le deuxième soufflet 16 connecte le corps interne 20 à la partie menée 12a.

Les soufflets 16 peuvent être formés par au moins une ondulation annulaire et faire saillie de la face radialement externe 14 du corps externe 10. Les soufflets 16 présentent donc la forme d'un cylindre de révolution ondulé dans la direction de l'axe X. Ici, les soufflets 16 comprennent chacun une ondulation. Ceci n'est cependant pas limitatif, chaque soufflet 16 pouvant comprendre un nombre d'ondulations supérieur ou égal à deux. Chaque ondulation du cylindre ondulé présente, de manière connue en soi, deux parois 16a, 16c inclinées et reliées entre elles par un sommet 16b arrondi. L'angle α entre les deux parois 16a, 16c, leur épaisseur e ainsi que la hauteur h (dimension entre le sommet 16b et l'extrémité radiale interne du soufflet 16) est ajusté en fonction de la rigidité conique désirée pour l'accouplement flexible 1. Ces paramètres (angle a, épaisseur e, hauteur h) peuvent être déterminés de manière connue en soi à l'aide d'un logiciel de conception assistée par ordinateur.

L'une des parois 16a du soufflet 16 est reliée à l'une des parties du corps externe 10 tandis que l'autre de ses parois 16c est reliée au corps interne 20. Ainsi, sur les figures, la paroi 16a du soufflet 16 qui est le plus proche de la première extrémité 11 est reliée à la partie menante 11a du corps externe 10, tandis que l'autre paroi 16c de ce soufflet 16 est reliée au corps interne 20. Par ailleurs, la paroi 16a du soufflet 16 qui est le plus proche de la deuxième extrémité 12 est reliée à la partie menée 12a du corps externe 10, tandis que l'autre paroi 16c de ce soufflet 16 est reliée au corps interne 20. La paroi 16c de chaque soufflet 16 présente donc une hauteur h plus grande que la parois 16a, puisque le corps interne 20 est logé dans le corps externe 10.

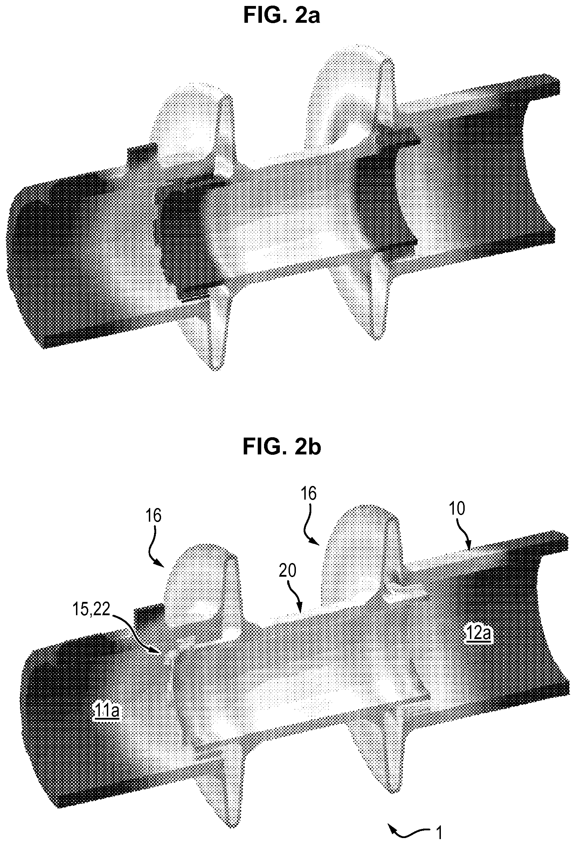

On pourra notamment se référer aux figure 2a et 2b, qui illustrent les contraintes dans un accouplement flexible 1 dépourvu de dents (figure 2a) et dans un accouplement flexible 1 conforme à l'invention et comprenant des dents 15, 22 (figure 2b), lorsqu'un couple est appliqué aux premières et deuxièmes extrémités de ces deux accouplements flexibles. En particulier, il apparaît sur ces figures que, lorsque l'accouplement flexible 1 est dépourvu de dents, la contrainte maximale dans cet accouplement flexible 1 se concentre dans ses soufflets 16 (figure 2a) où elle atteint un maxima. En revanche, lorsque l'accouplement flexible 1 comporte des premières et deuxièmes dents 15, 22, la contrainte est répartie dans le corps interne 20 sans se concentrer au niveau des soufflets 16. En outre, la valeur maximale de la contrainte dans l'accouplement flexible 1 conforme à l'invention (figure 2b) n'atteint pas le maxima atteint par la contrainte dans l'accouplement flexible 1 dépourvu de dents (figure 2a). Les premières et deuxièmes dents 15, 22 permettent donc de court-circuiter mécaniquement les soufflets 16 qui apportent sa flexibilité à l'accouplement flexible 1 lorsqu'il est soumis à un couple, ce qui empêche le couple de transiter par les parties flexibles et donc de limiter le couple pouvant être appliqué ainsi que la vitesse de rotation pouvant être atteinte par les arbres menant et mené. En d'autres termes, Il devient donc possible de dimensionner les paramètres du ou des soufflets 16 afin d'obtenir la rigidité conique voulue, indépendamment de la tenue au couple de l'accouplement flexible 1.

La première extrémité 11 et la deuxième extrémité 12 de l'accouplement flexible 1 sont configurées pour être reliées respectivement à l'arbre menant et à l'arbre mené. Pour cela, l'arbre menant et l'arbre mené comportent chacun un logement délimité par une paroi interne, ledit logement étant configuré pour recevoir l'extrémité correspondante.

Afin de relier solidairement l'accouplement flexible 1 aux arbres menant et mené, la première et la deuxième extrémité 11, 12 du corps externe 10 comprennent chacune au moins une portée 17 (de préférence au moins trois portées 17 afin d'assurer un équilibrage de l'accouplement flexible 1), configurées pour venir en contact serré avec la paroi interne du logement associé. Dans une forme de réalisation, les portées 17 sont séparées deux à deux par des gorges 18 de sorte que, en fonctionnement, la vitesse de rotation de l'accouplement flexible 1 génère un effort centrifuge qui tend à écarter les portées 17 de l'axe X, et renforce ainsi le serrage de l'accouplement flexible 1 contre les parois associées des arbres menant et mené.

De préférence, les portées 17 sont ajustées de manière à présenter un jeu avec la paroi du logement associé de l'ordre de 0.02 mm (à 0.01 mm près). Pour cela, les portées 17 peuvent par exemple être reprises au tour après caractérisation des logements.

Généralement, les logements sont préexistants dans chaque arbre. En variante, les logements peuvent être réalisés spécifiquement pour recevoir l'accouplement flexible 1.

L'accouplement flexible 1 comporte en outre au moins un ergot 19, s'étendant radialement depuis la face radialement externe 14 de la partie menante 11a du corps externe 10 et de la partie menée 12a du corps externe 10. Chaque ergot 19 est configuré pour pénétrer une rainure associée formée dans la paroi du logement de l'arbre correspondant afin d'assurer une transmission du couple entre l'arbre menant et l'arbre mené.

De préférence, la première et la deuxième extrémité 11, 12 du corps externe 10 comprennent chacune au moins trois ergots 19 équirépartis circonférentiellement sur leur périphérie afin d'assurer un équilibrage de l'accouplement flexible 1, la paroi du logement associé comportant au moins autant de rainures complémentaires. La section des ergots 19 est choisie en fonction du couple à transmettre. Un tel dimensionnement pourra notamment être réalisé à l'aide d'un logiciel de conception assistée par ordinateur.

De préférence, l'accouplement flexible 1 est monolithique et réalisé d'un seul tenant. Par conséquent, la partie menante 11a du corps externe 10, les soufflets 16, le corps interne 20 et la partie menée 12a du corps externe 10 sont venus de matière de sorte à être formés intégralement et en une seule pièce. Aucun élément d'assemblage du type vis, écrou, lamelle, etc. n'est donc nécessaire de sorte que l'accouplement flexible 1 est simple, facile à réaliser, de faible masse et apte à être équilibré finement. Le temps de montage est en outre réduit, puisqu'il ne nécessite pas de bridage ou de serrage.

Pour cela, l'accouplement flexible 1 peut notamment être réalisé en métal par fabrication additive, typiquement par exemple en acier. Dans ce cas, lors de la fabrication additive, les premières et deuxièmes dents 15, 22 peuvent être réalisées d'un seul tenant et ne former qu'une seule pièce, puis, au cours d'une deuxième étape, être séparées l'une de l'autre, par exemple par électroérosion. Il est ainsi possible d'obtenir un jeu de l'ordre de 0.1 mm entre chaque première et deuxième dent 22 associées.

Dans un mode de réalisation non illustré sur les figures, l'accouplement flexible 1 comprend des troisièmes dents (de préférence autant de troisièmes dents que de premières dents 15) s'étendant depuis la face radialement externe 21 du corps interne 20 afin de permettre l'utilisation de l'accouplement flexible 1 dans les deux sens de rotation. Les troisièmes dents sont alors positionnées de manière symétrique aux deuxièmes dents 22 par rapport aux premières dents 15. En d'autres termes, chaque première dent 15 est entourée d'une deuxième dent 22 et d'une troisième dent. La présence des troisièmes dents permet l'utilisation de l'accouplement flexible 1 dans les deux sens de rotation autour de son axe X, de sorte que la deuxième extrémité 12 pourra être reliée à l'arbre menant tandis que la première extrémité 11 sera reliée à l'arbre mené.

Les caractéristiques décrites en relation avec les deuxièmes dents 22 sont également valables pour ces troisièmes dents. De mêmes, les troisièmes dents peuvent être réalisées lors de la fabrication additive du reste de l'accouplement flexible 1 en formant lesdites troisièmes dents intégralement et en une seule pièce avec la première dent 15 et la deuxième dent 22 correspondantes, puis en les séparant de la première dent 15.

L'accouplement flexible 1 selon l'invention peut donc être aisément réalisé de manière indépendante des fabricants usuels et autorise une adaptation aisée de la valeur de sa rigidité conique en fonction des besoins de l'application.

En outre, il nécessite peu d'adaptation sur les arbres menants et menés devant être accouplés, puisqu'il suffit généralement de réaliser une ou plusieurs rainures dans la paroi définissant leur logement.

## Revendications

1. Accouplement flexible (1) configuré pour accoupler un premier arbre et un deuxième arbre, ledit accouplement flexible (1) comprend :
- un premier corps (10) d'accouplement externe sensiblement cylindrique de révolution autour d'un axe (X), ledit premier corps (10) comportant une première extrémité (11) configurée pour être fixée au premier arbre, une deuxième extrémité (12) configurée pour être fixée au deuxième arbre et un tronçon de liaison (16) qui relie la première et la deuxième extrémité (11,12),
le premier corps (10) présentant une face radialement interne (13) et comprenant au moins une première dent (15), fixée sur la face radialement interne (13),
- un deuxième corps (20) d'accouplement interne sensiblement cylindrique de révolution qui est disposé à l'intérieur du premier corps (10) en en étant fixé au tronçon de liaison (16), le deuxième corps (20) présentant une face radialement externe (21) et comprend au moins une deuxième dent (22) fixée sur ladite face radialement externe (21),
le premier corps (10) comportant une partie menante (11a) et une partie menée (12a), la partie menante (11a) et la partie menée (12a) étant reliées entre elles par l'intermédiaire du deuxième corps (20),
le tronçon de liaison (16) comprend en outre un premier soufflet (16) reliant la partie menante (11a) du premier corps (10) au deuxième corps (20) et un deuxième soufflet (16) reliant le deuxième corps (20) à la partie menée (12a) du premier corps (10),
l'accouplement flexible (1) est symétrique par rapport à un plan radial, ledit plan radial étant normal à l'axe (X),
le premier et le deuxième soufflets (16) sont formés par au moins une ondulation annulaire faisant saillie d'une face radialement externe (21) du premier corps (10), le premier et le deuxième soufflets (16) présentant chacun une première paroi (16a), s'étendant radialement par rapport à la partie menante (11a) du premier corps (10), une deuxième paroi (16c) fixée sur le deuxième corps (20) et un sommet (16b) reliant la première paroi (16a) et la deuxième paroi (16c), une hauteur radiale de la première paroi étant inférieure à une hauteur radiale de la deuxième paroi e
l'accouplement flexible étant **caractérisé en ce que**:
la première dent (15) et la deuxième dent (22) sont configurées pour venir en contact lorsqu'un couple est appliqué à la première extrémité (11) du premier corps (10) afin de transmettre ledit couple à la deuxième extrémité (12) du premier corps (10) par l'intermédiaire du deuxième corps (20).

2. Accouplement flexible (1) selon la revendication 1, comprenant plusieurs premières dents (15) et autant de deuxièmes dents (22), chaque première dent (15) étant configurée pour venir en contact avec la deuxième dent (22) correspondante lorsqu'un couple est appliqué à la première extrémité (11) du premier corps (10) afin de transmettre ledit couple à la deuxième extrémité (12) du premier corps (10) par l'intermédiaire du deuxième corps (20).

3. Accouplement selon l'une des revendications 1 ou 2, dans lequel la première extrémité (11) et la deuxième extrémité (12) du premier corps (10) sont configurées pour être insérées dans des logements correspondants formés dans le premier arbre et le deuxième arbre, respectivement, et dans lequel la première extrémité (11) et la deuxième extrémité (12) comportent au moins une portée (17) qui s'étend selon l'axe (X) et qui est configurée pour venir en appui contre une paroi du logement correspondant.

4. Accouplement flexible (1) selon la revendication 3, dans lequel la première extrémité (11) et la deuxième extrémité (12) comportent au moins trois portées (17), séparées deux à deux par une gorge (18).

5. Accouplement selon l'une des revendications 1 à 4, dans lequel la première extrémité (11) et la deuxième extrémité (12) du premier corps (10) sont configurées pour être insérées dans des logements correspondants formés dans le premier arbre et le deuxième arbre, respectivement, et dans lequel la première extrémité (11) et la deuxième extrémité (12) comportent chacune au moins un ergot (19) configuré pour pénétrer dans une rainure associée formée dans une paroi du logement correspondant.

6. Accouplement flexible (1) selon l'une des revendications 1 à 5, dans lequel le premier corps (10) et le deuxième corps (20) sont monolithiques.

## Patentansprüche

1. Flexible Kupplung (1), konfiguriert, um eine erste Welle und eine zweite Welle anzukoppeln, wobei die flexible Kupplung (1) umfasst:
- einen ersten im Wesentlichen zylindrischen außenliegenden Kupplungskörper (10), der sich um eine Achse (X) dreht, wobei der erste Körper (10) ein erstes Ende (11) beinhaltet, konfiguriert, um an der ersten Welle befestigt zu werden, ein zweites Ende (12), konfiguriert, um an der zweiten Welle befestigt zu werden, und einen Verbindungsabschnitt (16), der das erste und das zweite Ende (11, 12) verbindet,
wobei der erste Körper (10) eine radial innenliegende Fläche (13) aufweist und mindestens einen ersten Zahn (15) umfassend, der an der radial innenliegenden Fläche (13) befestigt ist,
- einen zweiten im Wesentlichen zylindrischen inneren Kupplungskörper (20), der innerhalb des ersten Körpers (10) angeordnet ist, indem er am Verbindungsabschnitt (16) befestigt ist,
wobei der zweite Körper (20) eine radial außenliegende Fläche (21) aufweist und mindestens einen zweiten Zahn (22) umfassend, der an der radial außenliegenden Fläche (21) befestigt ist,
wobei der erste Körper (10) ein Antriebsteil (11a) beinhaltet und ein Abtriebsteil (12a), wobei das Antriebsteil (11a) und das Abtriebsteil (12a) mittels dem zweiten Körper (20) miteinander verbunden sind,
der Verbindungsabschnitt (16) umfasst ferner einen ersten Faltenbalg (16), der das Antriebsteil (11a) des ersten Körpers (10) mit dem zweiten Körper (20) verbindet, und einen zweiten Faltenbalg (16), der den zweiten Körper (20) mit dem Abtriebsteil (12a) des ersten Körpers (10) verbindet,
die flexible Kupplung (1) ist symmetrisch relativ zu einer radialen Ebene, wobei die radiale Ebene senkrecht zur Achse (X) ist,
der erste und der zweite Faltenbalg (16) sind durch mindestens eine ringförmige Wellung gebildet, die von einer radial außenliegenden Fläche (21) des ersten Körpers (10) vorsteht, wobei der erste und der zweite Faltenbalg (16) jeweils eine erste Wand (16a) aufweisen, die sich radial relativ zum Antriebsteil (11a) des ersten Körpers (10) erstreckt, eine zweite Wand (16c), die am zweiten Körper (20) befestigt ist, und einen Scheitel (16b), der die erste Wand (16a) und die zweite Wand (16c) verbindet, wobei eine radiale Höhe der ersten Wand kleiner ist als eine radiale Höhe der zweiten Wand und die flexible Kupplung ist **dadurch gekennzeichnet, dass**:
der erste Zahn (15) und der zweite Zahn (22) konfiguriert sind, um in Kontakt zu kommen, wenn ein Drehmoment an das erste Ende (11) des ersten Körpers (10) angelegt wird, um das Drehmoment mittels dem zweiten Körper (20) auf das zweite Ende (12) des ersten Körpers (10) zu übertragen.

2. Flexible Kupplung (1) nach Anspruch 1, mehrere erste Zähne (15) und ebenso viele zweite Zähne (22) umfassend, wobei jeder erste Zahn (15) konfiguriert ist, um mit dem entsprechenden zweiten Zahn (22) in Kontakt zu kommen, wenn ein Drehmoment an das erste Ende (11) des ersten Körpers (10) angelegt wird, um das Drehmoment mittels dem zweiten Körper (20) auf das zweite Ende (12) des ersten Körpers (10) zu übertragen.

3. Kupplung nach einem der Ansprüche 1 oder 2, wobei das erste Ende (11) und das zweite Ende (12) des ersten Körpers (10) konfiguriert sind, um in entsprechende Sitze eingesetzt zu werden, die in der ersten Welle beziehungsweise der zweiten Welle ausgebildet sind, und wobei das erste Ende (11) und das zweite Ende (12) mindestens eine Ausladung (17) beinhalten, die sich entlang der Achse (X) erstreckt und konfiguriert ist, um an einer Wand des entsprechenden Sitzes aufzuliegen.

4. Flexible Kupplung (1) nach Anspruch 3, wobei das erste Ende (11) und das zweite Ende (12) mindestens drei Ausladungen (17) beinhalten, die paarweise durch eine Nut (18) getrennt sind.

5. Kupplung nach einem der Ansprüche 1 bis 4, wobei das erste Ende (11) und das zweite Ende (12) des ersten Körpers (10) konfiguriert sind, um in entsprechende Sitze eingesetzt zu werden, die in der ersten Welle beziehungsweise der zweiten Welle ausgebildet sind, und wobei das erste Ende (11) und das zweite Ende (12) mindestens einen Nocken (19) beinhalten, der konfiguriert ist, um in eine zugehörige Nut einzudringen, die in einer Wand des entsprechenden Sitzes ausgebildet ist.

6. Flexible Kupplung (1) nach einem der Ansprüche 1 bis 5, wobei der erste Körper (10) und der zweite Körper (20) monolithisch sind.

## Claims

1. A flexible coupling (1) configured to couple a first shaft and a second shaft, said flexible coupling (1) comprises :
- a first external coupling body (10) substantially cylindrical in revolution about an axis (X), said first body (10) having a first end (11) configured to be attached to the first shaft, a second end (12) configured to be attached to the second shaft, and a connecting section (16) that connects the first and second ends (11, 12), the first body (10) having a radially inner face (13) and comprising at least a first tooth (15), attached to the radially inner face (13),
- a second inner coupling body (20) substantially cylindrical in revolution which is arranged inside the first body (10) and is attached to the connecting section (16), the second body (20) having a radially outer face (21) and comprising at least one second tooth (22) attached to said radially outer face (21),
the first body (10) having a driving portion (11a) and a driven portion (12a), the driving portion (11a) and the driven portion (12a) being connected to each other via the second body (20),
the connecting section further comprises a first bellows (16) connecting the driving part (11a) of the first body (10) to the second body (20) and a second bellows (16) connecting the second body (20) to the driven part (12a) of the first body (10),
the flexible coupling (1) is symmetrical about a radial plane, said radial plane being normal to the axis (X),
the first and second bellows (16) are formed by at least one annular corrugation protruding from a radially outer face (21) of the first body (10), the first and second bellows (16) each having a first wall (16a), extending radially with respect to the driving portion (11a) of the first body (10) a second wall (16c) fixed to the second body (20) and a top (16b) connecting the first wall (16a) and the second wall (16c), a radial height of the first wall being less than a radial height of the second wall and the flexible coupling being **characterised in that** :
the first tooth (15) and the second tooth (22) are configured to come into contact when a torque is applied to the first end (11) of the first body (10) in order to transmit said torque to the second end (12) of the first body (10) via the second body (20).

2. A flexible coupling (1) according to claim 1, comprising a plurality of first teeth (15) and an equal number of second teeth (22), each first tooth (15) being configured to contact the corresponding second tooth (22) when a torque is applied to the first end (11) of the first body (10) in order to transmit said torque to the second end (12) of the first body (10) via the second body (20).

3. A coupling according to one of claims 1 or 2, wherein the first end (11) and the second end (12) of the first body (10) are configured to be inserted into corresponding housings formed in the first shaft and the second shaft, respectively, and wherein the first end (11) and the second end (12) comprise at least one land (17) that extends along the axis (X) and that is configured to abut a wall of the corresponding housing.

4. A flexible coupling (1) according to claim 3, wherein the first end (11) and the second end (12) comprise at least three lands (17), separated in pairs by a groove (18).

5. A coupling according to any of claims 1 to 4, wherein the first end (11) and the second end (12) of the first body (10) are configured to be inserted into corresponding housings formed in the first shaft and the second shaft, respectively, and wherein the first end (11) and the second end (12) each comprise at least one pin (19) configured to enter an associated groove formed in a wall of the corresponding housing.

6. A flexible coupling (1) according to any of claims 1 to 5, wherein the first body (10) and the second body (20) are monolithic.
